# EUROPÄISCHE PATENTANMELDUNG

(11) **EP 4 123 191 A1**
(43) Veröffentlichungstag der Anmeldung: **25.01.2023**
(21) Anmeldenummer: 21186975.5
(22) Anmeldetag: 21.07.2021
(51) Int. Cl.: F16C 27/02, F16C 27/06, F16F 3/087

(54) **LAGERELEMENT FÜR EINE ROTIERENDE WELLE**

(71) Anmelder: Siemens Aktiengesellschaft, 80333 München (DE)
(72) Erfinder: Schuh, Carsten, 85598 Baldham (DE)

(57) **Zusammenfassung**

Die Erfindung betrifft ein Lagerelement (2) für eine rotierende Welle (4) umfassend einen Lagerring (6), der zumindest teilweise von einem Gehäuse (8) umgeben ist, wobei in dem Gehäuse (8) aneinander gestapelte Dämpfungsscheiben (10) entlang einer Wellenachse (12) in Form eines Dämpfungsscheibenstapels (14) angeordnet sind, der den Lagerring (6) ringförmig umgibt, dadurch gekennzeichnet,
- dass die Dämpfungsscheiben (10) einen keilförmigen Querschnitt (16, 18) aufweisen, wobei
- die Dämpfungsscheiben (10) so ausgestaltet sind, dass in einer Stapelfolge jeweils sich eine Dämpfungsscheibe (10) mit einem sich nach innen verjüngenden keilförmigen Querschnitt (16) und einen sich nach außen verjüngenden keilförmigen Querschnitt (18) abwechseln, so dass die Dämpfungsscheiben (10) formschlüssig in einander greifen und
- der Dämpfungsscheibenstapel (14) von einem Spannring (20) umgeben ist.

## Beschreibung

Die Erfindung betrifft ein Lagerelement für eine rotierende Welle nach dem Oberbegriff des Patentanspruchs 1 sowie eine elektrische Maschine nach dem Anspruch 10.

Bei rotierenden Maschinen weisen die Rotoren eine dynamisch sich ändernde Relativbewegung in radialer und auch axialer Richtung in Bezug auf die quasi-ruhenden Statoren bzw. Gehäuse auf. Diese Relativbewegungen können sowohl entlang der Rotorachse als auch dem Rotoraußenumfang unterschiedlich und sich dynamisch ändernd ausgebildet sein. De facto ändert sich somit dynamisch das jeweilige lokale Spaltmaß zwischen Rotor und Stator in jedem Ortspunkt auf der Rotoroberfläche.

Die Rotoren selbst bewegen sich dabei dynamisch mit unterschiedlichen Resonanzmoden, was bei elektrischen Maschinen im Wesentlichen durch die erzeugten elektromagnetischen Kräfte, die mechanischen Fliehkräfte (z. B. Unwuchten) und die dynamische Steifigkeit und Dämpfungseigenschaft von Rotor, Rotorlagerung im Gehäuse, dem Gehäuse selbst sowie der Lagerung des Gehäuses hervorgerufen und beeinflusst wird. Die mechanische Wirkkette kann dabei als Reihenschaltung folgender Elemente beschrieben werden. Zum einen wären dabei Toleranzen des Aufbaus von Rotor, Lager und Stator bzw. Gehäuse zu nennen. Hierunter fallen z. B. geometrische Toleranzen, Unwuchten, Lagerspiel, radiale unterschiedliche thermische Ausdehnungskoeffizienten, Exzentrizitäten, Steifigkeitsunterschiede usw.. Hinzu kommen in radialer Richtung unterschiedliche elektromagnetische Felder und Induktivitäten sowie unterschiedliche lokale Erwärmungen des Gesamtaufbaus im Betrieb. Diese Einflussfaktoren führen zur Ausbildung einer resonanten dynamischen Eigenschwingung der Rotorachse für jeden spezifischen Ansteuerungs- und Lastfall. Die so erzeugten dynamischen Relativbewegungen der Rotorachse wirken über das Rotorlager und die Lagerbuchse in das Lagerschild des Motorgehäuses.

Aufgrund der so beschriebenen mechanischen Wirkungskette kommt es bei einer angeregten resonanten Eigenschwingung der Rotorachse zu mechanischen Schwingungen im Gehäuse und Gehäuselager, welche sich dann als Vibration in Form von Körperschall als auch in Form von akustischen Phänomenen wie Geräuschen bemerkbar machen.

Um Motorgeräusche und Schwingungen zu reduzieren, werden nach dem Stand der Technik folgende Maßnahmen umgesetzt. Z. B. werden träge Massen am Rotor eingesetzt, oder der Rotor wird überdimensioniert, sodass eine Verschiebung der Resonanzfrequenzen der mechanischen Komponenten in einen unkritischen Bereich erfolgt. Zum anderen ist der Einbau von Gummi-O-Ringen in den Lagersitz der Rotoren üblich. Auch das Anbringen passiver Dämpfungselemente für bestimmte Resonanzschwingungsbereiche sowohl am Rotor selbst als auch am Motorgehäuse bzw. an den Auflagern des Gehäuses ist üblich. Dabei haben diese beschriebenen Maßnahmen im Allgemeinen jedoch eine signifikante Reduktion der Lagersteifigkeit und damit ein höheres relatives Spaltmaß zur Folge.

Die Aufgabe der Erfindung besteht darin, eine Verbesserung der Dämpfung der entstandenen Rotorschwingung herbeizuführen und damit eine Reduzierung der mechanischen Schwingungen und der Geräuschentwicklung am Motor zu erzielen.

Die Lösung der Aufgabe besteht in einem Lagerelement mit den Merkmalen des Patentanspruchs 1 sowie in einer elektrischen Maschine mit den Merkmalen des Patentanspruchs 10.

Das erfindungsgemäße Lagerelement gemäß Patentanspruch 1 für eine rotierende Welle umfasst einen Lagerring, der zumindest teilweise von einem Gehäuse umgeben ist. In dem Gehäuse sind aneinander gestapelte Dämpfungsscheiben entlang einer Wellenachse in Form eines Dämpfungsscheibenstapels angeordnet. Dieser Dämpfungsscheibenstapel umgibt den Lagerring ringförmig.

Die Erfindung zeichnet sich dadurch aus, dass die Dämpfungsscheiben einen keilförmigen Querschnitt aufweisen. Der keilförmige Querschnitt der Dämpfungsscheiben ist dabei so ausgestaltet, dass in einer Stapelfolge jeweils eine Dämpfungsscheibe mit einem sich nach Innen verjüngenden keilförmigen Querschnitt und eine Dämpfungsscheibe mit einem sich nach Außen verjüngenden keilförmigen Querschnitt abwechseln. Auf diese Weise greifen die Dämpfungsscheiben in axialer Richtung formschlüssig ineinander und ergeben einen der Achse folgenden Stapel. Ferner wird der Dämpfungsscheibenstapel von einem Spannring umgeben.

Das Zusammenwirken der konisch ineinandergreifenden Dämpfungsscheiben in dem Dämpfungsscheibenstapel und die durch den äußeren Spannring induzierte radiale Spannung, die bei dem beschriebenen Aufbau die einzelnen Dämpfungsscheiben ineinander pressen, bewirkt, dass die Kraft-Weg-Charakteristik und damit die dynamischen Dämpfungseigenschaften des Lagerelementes gezielt statisch voreingestellt werden können.

Dies bewirkt u. a., dass die dynamischen Dämpfungseigenschaften bei gleichem Design des Lagerelementes für verschiedene Motortypen und jede spezifische Anwendung gezielt und individuell eingestellt werden können. Das beschriebene Lagerelement besitzt trotz der beschriebenen guten Dämpfungseigenschaften eine hohe mechanische Steifigkeit sowohl in radialer als auch axialer Richtung. Dabei wird eine notwendige axiale Beweglichkeit zur Kompensation von thermischen Ausdehnungen des Rotors nicht behindert. Ferner bietet das beschriebene Lagerelement die Möglichkeit, die Maschine leichter und weniger steif zu konstruieren, ohne dabei einen Zuwachs der Geräuschentwicklung in Kauf nehmen zu müssen.

Die Kraft-Weg-Charakteristik des Dämpfungselementes kann insbesondere bei einer vorgegebenen Lagergeometrie durch den Radius bzw. den Durchmesser des Spannringes eingestellt werden. Bei einem geringeren Radius bzw. Durchmesser des Spannringes werden die Dämpfungsscheiben stärker ineinander gedrückt, was die Vorspannung des Dämpfungsscheibenstapels erhöht. Hieraus wird auch eine stärkere Dämpfung resultieren.

Hierbei ist es wiederum zweckmäßig, wenn es sich bei den Dämpfungsscheiben um ein Material mit einem definierten Elastizitätsmodul handelt. Es hat sich dabei herausgestellt, dass ein Elastizitätsmodul zwischen 1.000 N/mm² und 10.000 N/mm² besonders gut geeignet ist. Als Material eignet sich hierbei insbesondere ein Elastomer, das einen Elastizitätsmodul in dem beschriebenen Bereich aufweist.

Beim Aufbau des Dämpfungselementes hat sich ferner herausgestellt, dass es zweckmäßig ist, dass der Dämpfungsscheibenstapel zwischen dem Lagerring und dem Spannring von Scheibenlagerringen in Zylinderform gelagert ist. Somit sind bevorzugt zwei zusätzliche ringförmige Halteelemente für den Dämpfungsscheibenstapel in Form von Scheibenlagerringen vorgesehen. Diese dienen dazu, den Dämpfungsscheibenstapel in Form zu halten und bieten Vorteile bei der Montage und Konstruktion des Lagerelementes. In einer weiteren vorteilhaften Ausgestaltung der Erfindung sind zwischen den Dämpfungsscheiben elastische Gleitelemente angeordnet, durch die das Ineinanderschieben der Dämpfungsscheiben und somit der Aufbau der Spannung des Dämpfungselementes verbessert wird. Gleichzeitig oder alternativ hierzu kann es zweckmäßig sein, dass in Hohlräumen zwischen den Dämpfungsscheiben ein flüssiges Gleitmittel, beispielsweise in Form eines Öles, vorhanden ist. Auch dies kann zusätzlich oder begleitend die radiale Verschiebbarkeit der Dämpfungsscheiben mit den konischen Querschnitten zueinander verbessern.

Eine weitere Ausgestaltungsform der Erfindung ist eine elektrische Maschine mit einem Lagerelement nach einem der Ansprüche 1 - 9. Unter einer elektrischen Maschine fallen insbesondere Elektromotoren und Generatoren.

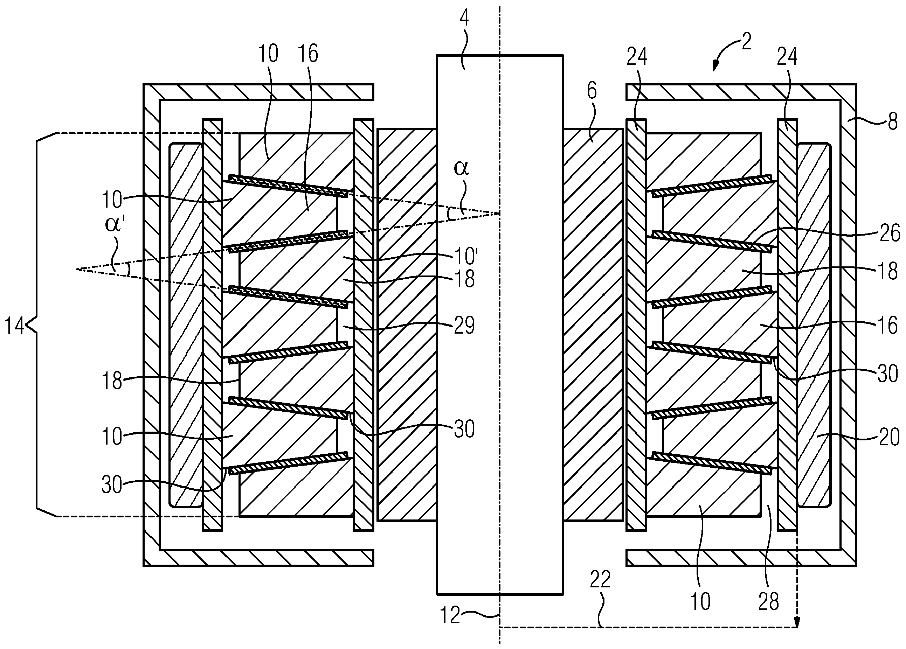

Weitere Ausgestaltungsformen und weitere Merkmale der Erfindung werden in der nachfolgenden Figur näher erläutert. Dabei zeigt die einzige Figur:
- Figur: einen Querschnitt durch ein Lagerelement mit einer rotierenden Welle einer elektrischen Maschine.

In der Figur ist in sehr schematischer Weise ein Querschnitt durch den Bereich eines Lagerelementes 2 einer nicht näher dargestellten elektrischen Maschine gezeigt. Dabei ist das Lagerelement 2 ein Bestandteil der elektrischen Maschine, wobei eine rotierende Welle 4, die ebenfalls Bestandteil der elektrischen Maschine ist, die allerdings kein Bestandteil des Lagerelementes 2 ist, durch dieses durchgeführt ist und durch das Lagerelement 2 gelagert wird. Die rotierende Welle 4 weist eine Wellenachse 12 auf, um die die Welle 4 rotiert.

Das hier beschriebene Lagerelement 2 wird am Beispiel einer elektrischen Maschine beschrieben. Grundsätzlich kann das beschriebene Lagerelement jedoch auch Bestandteil einer anderen Maschine, beispielsweise eines Hubkolbenmotors sein, dort beispielsweise als Lagerelement für eine Nockenwelle oder eine Kurbelwelle bzw. aber auch für eine Antriebswelle.

Die rotierende Welle 4 wird dabei von einem Lagerring 6 umschlossen, der als Gleitlager für die rotierende Welle 4 fungiert. Der Lagerring 6 wird dabei wiederum in einem Gehäuse 8 aufgenommen, was in der Figur sehr schematisch dargestellt ist. In dem Gehäuse 8 sind bezüglich des Lagerrings 6 radial äußerlich gesehen jeweils zwei Scheibenlagerringe 24 angeordnet, zwischen denen ein Dämpfungsscheibenstapel 14 angeordnet ist.

Auf den Aufbau des Dämpfungsscheibenstapels 14 soll im Weiteren näher eingegangen werden. Dieser Stapel 14 setzt sich aus einer Mehrzahl, jedoch mindestens zwei Dämpfungsscheiben 10 zusammen, die jeweils einen konischen Querschnitt 16, 18 aufweisen. Dabei sind die konischen Querschnitte 16, 18 der Dämpfungsscheiben 10 so ausgestaltet, dass sie sich bezüglich ihrer radialen Richtung unterscheiden. Der Querschnitt einer Dämpfungsscheibe 10 ist dabei verjüngend nach innen gerichtet, dieser Querschnitt wird mit dem Bezugszeichen 16 versehen. Darauf folgt eine Dämpfungsscheibe 10 mit einem Querschnitt 18, dessen Verjüngung radial nach außen gerichtet ist. Dabei weisen die Querschnitte 16 und 18 bevorzugt jeweils denselben spitzen Winkel auf, nur mit dem Unterschied, dass diese wie beschrieben jeweils nach innen oder nach außen gerichtet sind. Die Winkel α sind demnach in der Figur mit α bzw. α' bezeichnet, wobei α dem Querschnitt 16 zuzuordnen ist, der sich nach innen verjüngt, und α' dem Querschnitt 18 zuzuordnen ist, der sich nach außen verjüngt. Bei der beschriebenen Stapelfolge des Dämpfungsscheibenstapels 14 wird dabei erzielt, dass trotz unterschiedlicher geometrischer Ausgestaltung der einzelnen Dämpfungsscheiben 10 und 10' im Dämpfungsscheibenstapel 14 ein nahezu zylinderförmiges Gebilde entsteht, das an den Rändern jedoch etwas unregelmäßige Überstände hat.

Der Dämpfungsscheibenstapel 14, der von den Scheibenlagerringen 24 von innen und von außen umgeben ist, wird nun von einem weiteren Spannring 20 eingespannt. Der Spannring 20 kann dabei abhängig von seinem Radius 22 so auf die Kombination von Scheibenlagerring 24 und Dämpfungsscheibenstapel 14 einwirken, dass die einzelnen Dämpfungsscheiben 10 und 10' radial ineinander gedrückt werden und aufgrund der doppelt konischen Gegenüberstellung ineinander gepresst werden. Dies bedeutet geometrisch, dass die Überstände 30 verringert werden. Die Spannung, die hiermit auf den Dämpfungsscheibenstapel 14 und somit auf die gesamte dämpfende Wirkung des Lagerelementes 2 ausgeübt wird, kann durch den Radius 22 des Spannrings 20 angeglichen werden. Mit dieser Maßnahme können die Dämpfungseigenschaften des Lagerelementes 2 auf die Anforderung der rotierenden Welle bzw. der dahinter angeordneten Maschine, insbesondere der elektrischen Maschine, ausgerichtet werden.

Damit mittels einer radialen Kraft, die durch den Spannring 20 eingebracht wird, die einzelnen Dämpfungsscheiben 10, 10' besser ineinander schiebbar sind, ist in einer vorteilhaften Ausgestaltung der Erfindung zwischen den Dämpfungsscheiben 10, 10' ein elastisches Gleitelement 26 in Form einer elastischen Folie vorgesehen. Alternativ oder zusätzlich kann in die Zwischenräume zwischen den beiden Scheibenlagerringen 24 und somit auch zwischen den Dämpfungsscheiben 10, 10' auch noch ein flüssiges Gleitmittel, beispielsweise in Form eines Öles, eingebracht werden.

Als Material für die Dämpfungsscheiben 10 hat sich insbesondere ein Elastomer als vorteilhaft herausgestellt. Grundsätzlich sollte das Material für die Dämpfungsscheiben 10 einen Elastizitätsmodul aufweisen, der zwischen 1.000 N/mm² und 10.000 N/mm² liegt.

Das beschriebene Lagerelement weist dabei gegenüber dem Stand der Technik folgende Vorteile auf: Zum einen können bei einem gleichen Design die dynamischen Dämpfungseigenschaften des Lagerelementes 2 für jede Art von elektrischen Maschinen, beispielsweise bei Unterschieden in einer Baureihe, gezielt verändert und individuell eingestellt werden. Dabei weist das beschriebene Lagerelement 2 trotz sehr guter Dämpfungseigenschaften eine hohe mechanische Steifigkeit sowohl in radialer als auch in axialer Richtung auf. Das Lagerelement 2 hat dabei auch eine notwendige axiale Beweglichkeit, um mögliche thermische Ausdehnungen des Rotors zu kompensieren und diese nicht zu verhindern. Ferner wird eine verschleißbehaftete, direkte Reibung von einzelnen Strukturelementen unterbunden und damit eine definierte, reproduzierbare und resiliente Lösung zur effektiven Schwingungsdämpfung mit hoher Lebensdauer umgesetzt.

Ein hervorzuhebender Vorteil des beschriebenen Lagerelementes und der damit verbundenen elektrischen Maschine besteht darin, dass die elektrische Maschine gegenüber einer herkömmlichen elektrischen Maschine deutlich weniger Geräusche und Schwingungen emittiert. Dabei kann die elektrische Maschine mit deutlich weniger Aufwand steif konstruiert werden, ohne dabei eine Geräuschzunahme zu bewirken. Dies ist insbesondere für Motoren bzw. elektrische Maschinen notwendig und hilfreich, die eine hohe Leistung bei niedrigem Gewicht und geringem Bauraum benötigen. Das beschriebene Lagerelement 2 kann somit vorteilhaft in Motoren eingesetzt werden, die beispielsweise für Exo-Skelette, für Leichtbauroboter oder für Drohnen angewendet werden.

### Bezugszeichenliste

- 2: Lagerelement
- 4: rotierende Welle
- 6: Lagerring
- 8: Gehäuse
- 10: Dämpfungsscheibe
- 12: Wellenachse
- 14: Dämpfungsscheibenstapel
- 16: Querschnitt Dämpfungsscheibe nach innen verjüngend
- 18: Querschnitt Dämpfungsscheibe nach außen verjüngend
- 20: Spannring
- 22: Spannringradius
- 24: Scheibenlagerring
- 26: elastische Gleitelemente
- 28: flüssiges Gleitmittel
- 30: Überstände

## Patentansprüche

1. Lagerelement (2) für eine rotierende Welle (4) umfassend einen Lagerring (6), der zumindest teilweise von einem Gehäuse (8) umgeben ist, wobei in dem Gehäuse (8) aneinander gestapelte Dämpfungsscheiben (10) entlang einer Wellenachse (12) in Form eines Dämpfungsscheibenstapels (14) angeordnet sind, der den Lagerring (6) ringförmig umgibt, **dadurch gekennzeichnet,**
- **dass** die Dämpfungsscheiben (10) einen keilförmigen Querschnitt (16, 18) aufweisen, wobei
- die Dämpfungsscheiben (10) so ausgestaltet sind, dass in einer Stapelfolge jeweils sich eine Dämpfungsscheibe (10) mit einem sich nach innen verjüngenden keilförmigen Querschnitt (16) und einen sich nach außen verjüngenden keilförmigen Querschnitt (18) abwechseln, so dass die Dämpfungsscheiben (10) formschlüssig in einander greifen und
- der Dämpfungsscheibenstapel (14) von einem Spannring (20) umgeben ist.

2. Lagerelement nach Anspruch 1, **dadurch gekennzeichnet, dass** ein Spannringradius (22) variabel ist.

3. Lagerelement nach Anspruch 1 oder 2, **dadurch gekennzeichnet, dass** der Dämpfungsscheibenstapel (14) zwischen dem Lagerring (6) und dem Spannring (20) von Scheibenlagerringen (24) gelagert ist.

4. Lagerelement nach einem der vorhergehenden Ansprüche, **dadurch gekennzeichnet, dass** zwischen den Dämpfungsscheiben (10) elastische Gleitelemente (26) angeordnet sind.

5. Lagerelement nach Anspruch 4, **dadurch gekennzeichnet, dass** die Gleitelemente in Form einer Gleitfolie ausgestaltet ist.

6. Lagerelement nach einem der vorhergehenden Ansprüche, **dadurch gekennzeichnet, dass** die Dämpfungsscheiben (10) mit einem flüssigen Gleitmittel (28) in Kontakt stehen.

7. Lagerelement nach Anspruch 6, **dadurch gekennzeichnet, dass** das flüssige Gleitmittel (28) ein Öl ist

8. Lagerelement nach einem der vorhergehenden Ansprüche, **dadurch gekennzeichnet, dass** die Dämpfungsscheiben (10) einen Elastizitätsmodul aufweisen, der zwischen 1000 N/mm² und 10 000 N/mm² liegt.

9. Lagerelement nach einem der vorhergehenden Ansprüche, **dadurch gekennzeichnet, dass** die Dämpfungsscheibe (10) durch ein Elastomer ausgebildet ist.

10. Elektrische Maschine mit einem Lagerelement (2) nach einem der vorhergehenden Ansprüche.
